(19) **Europäisches Patentamt / European Patent Office / Office européen des brevets**

(11) **EP 3 269 254 B1**

(12) **EUROPEAN PATENT SPECIFICATION**

(45) Date of publication and mention
of the grant of the patent:
**04.03.2020 Bulletin 2020/10**

(21) Application number: **16755549.9**

(22) Date of filing: **24.02.2016**

(51) Int Cl.:
*A23L 5/00* (2016.01)    *A21D 2/14* (2006.01)
*A21D 13/10* (2017.01)    *A23D 7/00* (2006.01)
*A23G 1/00* (2006.01)    *A23G 1/30* (2006.01)
*A23L 17/00* (2016.01)

(86) International application number:
**PCT/JP2016/055419**

(87) International publication number:
**WO 2016/136805 (01.09.2016 Gazette 2016/35)**

(54) **COOL-FEELING FOOD PRODUCT**

LEBENSMITTELPRODUKT MIT KÜHLENDEM GEFÜHL

PRODUIT ALIMENTAIRE CRÉANT UNE SENSATION DE FROID

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **26.02.2015 JP 2015035953**

(43) Date of publication of application:
**17.01.2018 Bulletin 2018/03**

(73) Proprietor: **The Nisshin OilliO Group, Ltd.
Tokyo 104-8285 (JP)**

(72) Inventors:
• **NAKAHARA, Hiroko
Kanagawa 235-8558 (JP)**
• **YAMAGUCHI, Takahiro
Kanagawa 235-8558 (JP)**
• **KUBOTA, Koichi
Kanagawa 235-8558 (JP)**
• **KATAOKA, Naoto
Kanagawa 235-8558 (JP)**
• **KOBAYASHI, Tetsuya
Kanagawa 235-8558 (JP)**
• **TODA, Toru
Kanagawa 235-8558 (JP)**
• **OONISHI, Kiyomi
Kanagawa 235-8558 (JP)**

• **MURAYAMA, Noriko
Kanagawa 235-8558 (JP)**
• **AIBARA, Tomohiro
Kanagawa 235-8558 (JP)**
• **TSUKIYAMA, Muneo
Kanagawa 235-8558 (JP)**
• **TAKEGUCHI, Seiya
Kanagawa 235-8558 (JP)**
• **UEHARA, Hidetaka
Kanagawa 235-8558 (JP)**

(74) Representative: **KATZAROV S.A.
European Patent Attorneys
12, Avenue des Morgines
1213 Petit-Lancy (CH)**

(56) References cited:
JP-A- H02 700          JP-A- H06 141 808
JP-A- S63 202 340      JP-A- 2000 102 347
JP-A- 2005 213 304     JP-A- 2015 070 837
US-A- 3 658 555        US-A- 3 796 816
US-A1- 2005 287 286

• **ROACH R. R. ET AL.: 'Monocaprin and Tricaprin
in Breadmaking' CEREAL CHEMISTRY vol. 73,
no. 2, 1996, pages 197 - 198, XP055477008**

**Description**

TECHNICAL FIELD

The present invention relates to a cool-feeling imparted food product. More specifically, the present invention relates to a food product which can provide a cool feeling in the mouth upon consumption, and a method of manufacturing the same. Further, the present invention also relates to a method of imparting a cool feeling on a food product.

BACKGROUND ART

In recent years, consumers' preferences have been diversified and sophisticated. Further, in the era of satiation, traditional food products may not necessarily fully satisfy consumers' demands. In these circumstances where food products having unprecedented texture and flavor are demanded, food manufacturers are actively trying to develop/discover a material which can improve texture and flavor. In the context described above, much attention has been directed to a food product having a cool-feeling imparting texture with which cool feeling in the mouth and refreshing taste can be enjoyed.

For example, sugar alcohols having a large heat of dissolution such as erythritol and xylitol, which will absorb the heat of dissolution from the surroundings when dissolved in the mouth, are known to provide cool feeling when added to food products. For example, known is a chocolate product with cool feeling in which erythritol is included in chocolate (Patent Document 1). In addition, instead of sugar alcohols such as erythritol, fractionated oils such as coconut oil and palm kernel oil are used to impart cool feeling on food products. For example, known is a chocolate product with cool feeling which contains palm kernel oil fraction (Patent Document 2). Recently, a technology has been also known which can improve cool feeling in the mouth by increasing the abundance ratio of a triglyceride (trilaurin) having the total number of carbon atoms in the fatty acids of 36 (Patent Document 3). However, sugar alcohols have a disadvantage: they may not be readily added to various food products due to their intrinsic flavors. Fats and oils such as palm kernel oil also have a disadvantage: their cool-feeling imparting ability is usually small, and thus sufficient effects may not be obtained. Therefore, there have been demands for developing a technology for providing various food products having sufficient cool feeling in the mouth upon consumption.

Patent Document 1: Japanese Patent No. 2564255
Patent Document 2: Japanese Unexamined Patent Application, Publication No. S63-202340
Patent Document 3: Japanese Patent No. 4815746

US 3 658 555 recites a margarine possessing good spreadability and a strong cooling effect on melting on the tongue, said margarine comprising tricaprin.

DISCLOSURE OF THE INVENTION

Problems to be Solved by the Invention

An object of the present invention is to provide a food product with which cool feeling can be felt in the mouth upon consumption, and a method of manufacturing the food product. Another object of the present invention is to provide a method of imparting cool feeling on various food products.

Means for Solving the Problems

After conducting extensive studies to achieve the above objects, the present investors found that the above objects can be achieved when a specific amount of tricaprin is loaded into food products. Then the present invention has been completed.

That is, according to an aspect of the present invention, there is provided the use of tricaprin for imparting cool feeling on a food product, wherein the amount of tricaprin added to the food product is 0.1 to 99 mass% relative to the total mass of the food product.

Further, according to a preferred aspect of the present invention, in the above use, the food product is selected from the group consisting of cake, bread, cookie, fish paste products, chocolate, powdered chocolate, and cream.

Further, according to a preferred aspect of the present invention, the above use includes a step of mixing said food product with tricaprin so that the content of tricaprin is 0.1 to 99 mass% relative to the total mass of the food product.

Effects of the Invention

According to the present invention, a cool-feeling imparted food product can be simply manufactured by including tricaprin in a food product. The cool-feeling imparted food product according to the present invention, which can provide unique cool feeling and high palatability, can meet demands for those who have not been satisfied with traditional food products. In particular, it can be suitably marketed as a food product to be consumed in summer, and also marketed to counteract a decrease in demands during summer. Further, the cool-feeling imparted food product according to the present invention, which contains a large amount of tricaprin, can be conveniently used as a food product for effective energy supply, or a food product for helping medium chain fatty acid to show a pharmacological effect in a living body. Further, the present invention can provide a cool-feeling imparting agent having tricaprin as an active ingredient, and also can provide a method of imparting cool feeling on a food product. Tricaprin itself has no significant intrinsic flavor, and thus can be mixed with any food products without impairing the flavors of them (rather it may enhance the original flavors of these food products). Therefore, it can be used to impart cool feeling on various food products.

PREFERRED MODE FOR CARRYING OUT THE INVENTION

[Cool-feeling imparting agent for food products]

An aspect of the present invention is a cool-feeling imparting agent for food products having tricaprin as an active ingredient. Below, the cool-feeling imparting agent for food products will be described. It is noted that the term "cool feeling" as used herein refers to a cold sensation felt in the mouth, for example, as if ice is consumed. It is noted that cool feeling may also be referred to as cool refreshing feeling.

[Constituent fatty acid]

The cool-feeling imparting agent for food products according to the present invention contains tricaprin (fat and oil) as an active ingredient. Tricaprin is a triacylglycerol composed only of a medium chain fatty acid having 10 carbon atoms as a constituent fatty acid. That is, it is a triacylglycerol in which three molecules of capric acid (decanoic acid) are attached to glycerol via the ester linkages. Further, there is no particular limitation for the form of tricaprin, and it may be in a liquid state, a solid state, or in a powdery state. However, it is preferably in a powdery state in view of the easiness of handling and the strength of cool feeling. It is noted that a liquid-like form may be preferred when raw materials of a food product are mixed.

Tricaprin which can be used in the present invention can be manufactured by a publicly known method. For example, it can be manufactured by heating a fatty acid having 10 carbon atoms (which may include other fatty acids, if desired) and glycerol at 50 to 250ºC, more preferably at 120 to 180ºC in the presence of catalyst, preferably in the absence of catalyst, and preferably under reduced pressure to perform dehydration condensation. Here, there is no particular limitation for the catalyst, but, for example, an acid catalyst, a base catalyst, or the like used for common transesterification can be used. The term "under reduced pressure" refers to a pressure of, for example, 0.01 to 100 Pa, preferably 0.05 to 75 Pa, and more preferably 0.1 to 50 Pa. At this time, the content of water in the system is preferably small, and more preferably 0.2 mass% or less.

The cool-feeling imparting agent for food products according to the present invention is only required to contain tricaprin described above as an active ingredient, and may contain other components in addition to tricaprin within a range where the effects of the present invention are not impaired. For example, fats and oils such as soybean oil and rapeseed oil; excipients such as dextrin and starch; other additives for food products; and the like may be contained. Tricaprin has a low melting point, and thus quickly melts at the body temperature when placed in the mouth, during which heat of dissolution is absorbed very rapidly. This appears to be why cool feeling is felt in the mouth. However, the mechanism described herein is provided only as a guide for better understanding of the present invention, and the present invention shall not be limited to the above mechanism in any way.

According to a preferred aspect of the present invention, provided is a cool-feeling imparted food product characterized by containing a food product and the aforementioned cool-feeling imparting agent for food products. Here, there is no particular limitation for the food product as long as it is commonly available in the market. There is no particular limitation for the "food product" which can be used in the present invention as long as it can contain fat and oil. Examples of the food product include not only solid food products such as cake, bread, biscuit, cookie, snack, chocolate, candy, gum, pudding, jelly, sweet bean paste, cream, sauce, soup, dressing, cheese, butter, margarine, soy bean curd, ice cream, and fish paste products (fish paste cake) but also liquid food products such as juice, green tea, milk, coffee, refreshing beverages, and alcoholic beverages. Further powdered or granular food products such as powdered chocolate, powdered dressing, and Furikake seasoning can also be mentioned. In the present invention, particularly preferred are cake, bread, cookie, fish paste products, chocolate, powdered chocolate, and cream.

[Cool-feeling imparted food product]

The cool-feeling imparted food product according to the present invention contains a food product as described above and a cool-feeling imparting agent for food products as described above. In particular, the amount of tricaprin contained in the cool-feeling imparting agent for food products is suitably 0.1 to 99 mass% relative to the total mass of the cool-feeling imparted food product (the food product containing tricaprin). The amount of tricaprin contained in the cool-feeling imparting agent may widely vary as described above because tricaprin can be included in a wide variety of food products. Up to 99 mass% of tricaprin may be suitably included in oily food products while as low as less than 0.1 mass% of tricaprin cannot provide a desired effect. The content of tricaprin in the cool-feeling imparted food product according to the present invention is more preferably 1 to 75 mass% relative to the total mass of the cool-feeling imparted food product (the food product containing tricaprin), and even more preferably 2 to 50 mass%. A content of tricaprin in the cool-feeling imparted food product falling within the above range is preferred because a food product which can provide unique cool feeling and high palatability can be obtained. The cool-feeling imparted food product according to the present invention may further contain any other fat and oil materials as long as a suitable amount of tricaprin is included therein. For example, the cool-feeling imparted food product according to the present invention may further contain coconut oil, palm kernel oil, palm oil, fractionated palm oil (palm olein, palm super olein, and the like), shea butter, fractionated shea oil, sal fat, fractionated sal oil, illipe butter, soybean oil, rapeseed oil, cottonseed oil, safflower oil, sunflower oil, rice oil, corn oil, sesame oil, olive oil, milk fat, cocoa butter, and blended oils and modified fats and oils thereof, and the like. Further, tricaprin used in the present invention may be a mixture in which fats and oils of multiple different molecular species are mixed, for example, a mixture of tricaprin and tricapryl, and the like. Further, the different molecular species may be mixed triacylglycerol having a medium chain fatty acid having 6 to 12 carbon atoms and different fatty acids as constituent fatty acids. Here, mixed triacylglycerol may include a fatty acid other than the fatty acid having 6 to 12 carbon atoms as one of the constituent fatty acids, for example, may include a long chain fatty acid having 14 or more carbon atoms. The aforementioned fats and oils in which multiple different molecular species are mixed with tricaprin may also be referred to as "tricaprin-containing fats and oils" in the present invention.

The cool-feeling imparted food product according to the present invention can contain raw material commonly blended with a food product in addition to tricaprin as desired above. Specifically, for example, saccharide, a sweetening agent, an acidulant, salt, mineral, a stabilizer, a pH adjuster, a polysaccharide thickener, an emulsifying agent, a flavoring agent, a flavor, a coloring agent, and the like may be contained.

[Method of manufacturing cool-feeling imparted food product]

Below, the method of manufacturing a cool-feeling imparted food product according to the present invention will be desired in order. The method of manufacturing a cool-feeling imparted food product according to the present invention includes a step of mixing a food product as described above used as a raw material with tricaprin so that the content of tricaprin is 0.1 to 99 mass% relative to the total mass of the cool-feeling imparted food product (the food product containing tricaprin). Here, the definition of the food product used as a raw material and tricaprin, and the preferred ranges of the contents of tricaprin are as described above. Mixing the food product with tricaprin in the present invention can be performed in accordance with a conventionally known method. Specifically, for example, a food product is first prepared by a conventionally known method. Subsequently, tricaprin is added to the food product, and then, for example, thoroughly mixed to obtain a food product in which tricaprin is sufficiently dispersed or emulsified over the food product. The food product at this stage may be consumed as it is, but if desired, may be subjected to cooking such as boiling, steaming, baking, frying, and cooling to manufacture a food product as described above. That is, in the "step of mixing" according to the present invention, tricaprin may be mixed with a food product which is already in the final form, or tricaprin may be mixed with raw materials of a food product which is not in the final form. In the case of the latter, the food product in the final form will be produced through a subsequent cooking step. Here, the temperature when performing mixing may vary depending on food products, but may be usually the room temperature (25ºC). A mechanical device can be used for mixing, such as a mixer commonly used for typical mixing, a paddle mixer, a Nauta mixer, a Henschel mixer, a fluidized bed mixer, a V-blender, and a homogenizer.

[Method of imparting cool feeling on food product]

Meanwhile, a food product with cool feeling and high palatability can be obtained by adding tricaprin to a food product as described above. Accordingly, the present invention also relates to a method of imparting cool feeling on a food product, the method including a step of mixing the food product with tricaprin so that the content of tricaprin is 0.1 to 99 mass% relative to the total mass of the cool-feeling imparted food product (the food product containing tricaprin). As shown below, a conventional food product can be converted into a cool-feeling imparted food product when the cool-feeling imparting agent for food products according to the present invention is used to manufacture the conventional food product. Here, the definition of the food product used as a raw material and tricaprin, and the preferred ranges of the contents of tricaprin are as described above.

EXAMPLES

Next, the present invention will be described in more detail with reference to Examples and Comparative Examples. The present invention shall not be limited to these in any way.

Below, the symbol "%" means mass% unless otherwise stated. The composition of triacylglycerol contained in fats and oils were analyzed by the gas chromatography method (in accordance with JAOCS, vol 70, 11, 1111-1114 (1993)), and the silver ion column HPLC method (in accordance with J. High Resol. Chromatogr., 18, 105-107 (1995)). Constituent fatty acids in triacylglycerol (TAG) contained in fats and oils were analyzed by the gas chromatography method (in accordance with AOCS Celf-96).

<Raw fats and oils>

(1) Tricaprin-containing fat and oil (with a melting point of about 28ºC)

To a 500 mL four-neck flask having a stirrer, a thermometer, a nitrogen gas blowing tube, and a water separator, 44.1 g (0.479 mol) of glycerin (Sakamoto Yakuhin Kogyo Co., Ltd.), 25.9 g (0.091 mol) of stearic acid (Palmac 98-18 (Acid Chem)), and 266.0 g (1.544 mol) of capric acid (Palmac 99-10 (Acid Chem)) were charged, and allowed to react at a temperature of 250ºC for 15 hours under a nitrogen stream. After excess capric acid was distilled away at 190ºC under reduced pressure, decolorization/filtration and deodorization were performed to obtain 245 g of a light yellow liquid product at 50ºC (tricaprin: 80.6 mass%, monostearin dicaprin: 17.3 mass%). The resulting product in an amount of 60 g was mixed with 140 g of tricaprin (Nisshin OilliO Group, Ltd.) to prepare raw material fat and oil (200 g) (tricaprin: 94.0 mass%, monostearin dicaprin: 5.2 mass%). The raw material fat and oil was maintained at 80ºC for 0.5 hours to completely melt, and cooled in a thermostat bath at 10ºC for 1 hour, and then allowed to stand in a thermostat bath at 20ºC for 12 hours to form a solid product with an increased volume having voids. The solid product was then loosened to obtain a powdered crystalline composition (loose bulk density: 0.3 g/cm3, mean particle size: 116 μm). The powdered fat and oil composition manufactured in this way was used in the following Examples. Here, the loose bulk density was calculated from the bulk specific gravity measured based on JIS K-6720 (or ISO 1060-1 and 2) using a bulk specific gravity measuring instrument from Kuramochi Scientific Instruments Co., Ltd. Specifically, 120 mL of a sample was dropped to a receiver (a 100 mL cylindrical container with an inner diameter of 40 mm and a height of 85 mm) from a position 38 mm above the upper opening of the receiver. Subsequently, a portion of the sample raised on the receiver was pared off, and the mass (A g) of the sample corresponding to the volume of the receiver (100 mL) was weighed, and the loose bulk density was calculated by the following expression.

$$\text{Loose bulk density (g/mL)} = A \text{ (g)} / 100 \text{ (mL)}$$

Measurements were performed for 3 times, and the mean value was reported as a measured value. Here, the mean particle size was measured based on the laser diffraction scattering method (ISO133201, ISO9276-1) with a Microtrac MT3300 Ex II) from Nikkiso Co., Ltd.

(2) Salad oil

Salad oil (Product name: Nissin salad oil, Nisshin OilliO Group, Ltd.)

(3) Canola oil

Canola oil (Product name: Nissin canola oil, Nisshin OilliO Group, Ltd.)

(4) Fat and oil powder

Fat and oil powder (Spray Fat PM: Riken Vitamin Co., Ltd.)

<Other raw materials>

Raw materials for food products used in the following Examples are all commercialized, and readily available for public although detailed descriptions will be omitted. They include, for example, a cocoa powder (Cocoa powder DF500: Daitocacao co., Ltd.), a chocolate flavor (Chocolate coaton IL36882: Ogawa & Co .,Ltd.), a sweetening agent A (Miraseer NK: DSP Gokyo Food & Chemical Co., Ltd.), and a sweetening agent B (Sucralose: San-Ei Gen F.F.I., Inc.). It is noted that "Jisel 100" is an emulsifying foaming agent from Nisshin OilliO Group, Ltd., and "Melpiabase" is an oil-in-water type emulsion (cream base) from Nisshin OilliO Group, Ltd., both of which are commercially available.

[Example 1] Manufacture of cake

According to the compositions shown in the following Table 1, sponge cakes of Example 1 and Comparative Example 1 were manufactured by the conventional method (the all-in mixing method). Specifically, the tricaprin-containing fat and oil or the salad oil, superfine sugar, and Jisel 100 were first mixed according to the compositions shown below, and then whole egg was added and further mixed. To this, sieved weak flour and baking powder were then added, and whipped. A No. 6 cake pan was filled with 330 g of the dough obtained as described above, and baked at an upper flame baking temperature of 180ºC and a lower flame baking temperature of 170ºC for 32 minutes.

[Table 1]

| [Table 1] Compositions and evaluation of sponge cakes | | | | |
|---|---|---|---|---|
| | Example 1 | | Comparative Example 1 | |
| Compositions of raw materials | (g) | (%) | (g) | (%) |
| Jisel 100 | 17.0 | 4.07 | 17.0 | 4.07 |
| Tricaprin-containing fat and oil | 20.0 | 4.78 | - | - |
| Salad oil | - | - | 20.0 | 4.78 |
| Superfine sugar | 110.0 | 26.32 | 110.0 | 26.32 |
| Whole egg | 170.0 | 40.67 | 170.0 | 40.67 |
| Weak flour | 100.0 | 23.92 | 100.0 | 23.92 |
| Baking powder | 1.0 | 0.24 | 1.0 | 0.24 |
| Total of raw material | 418.0 | 100.00 | 418.0 | 100.00 |
| Evaluation results | | | | |
| Cool feeling | ○ | | × | |

<Evaluation of cake>

The sponge cakes from Example 1 and Comparative Example 1 manufactured as described above were evaluated in accordance with the following evaluation method.

<Method of evaluating cake>

(1) Method of evaluating cool feeling

Overall evaluation was performed by a panel of 5 trained personnel according to the following criteria.
Good: cool feeling is felt
Fair: cool feeling is felt moderately
Poor: Cool feeling is not felt
As clearly shown in Table 1, the sponge cake manufactured using the tricaprin-containing fat and oil according to the present invention generated cool feeling, but not that manufactured using the salad oil.

[Example 2] Manufacture of bread

According to the compositions shown in Table 2 below (the total amount of charged powder was 2.0 kg), loafs of bread of Example 2 and Comparative Example 2 were manufactured by the conventional method (the sponge dough method). Specifically, strong flour, fresh yeast, yeast food, and water were first mixed according to the compositions shown below, and kneaded at 25ºC. Next, the dough (sponge dough) obtained as described above was fermented at 28ºC for 240 minutes (at a humidity of 80%) . Next, strong flour, superfine sugar, salt, skimmed milk powder, the tricaprin-containing fat and oil or canola oil, and water were further added, and kneaded at 28ºC. The dough (final dough) obtained as described above was allowed to rise for a floor time of 30 minutes at 28ºC (at humidity of 80%), and divided into loafs of 340 g. They were allowed to rise for a bench time of 30 minutes at 28ºC (at humidity of 80%), and placed in loaf pans for shape forming. Subsequently, they was allowed to rise in a fermentation chamber at 38ºC for 60 minutes (at a humidity of 85%), and then placed in an oven and baked at an upper flame temperature of 200ºC and a lower flame temperature of 220ºC for 25 minutes.

[Table 2]

| [Table 2] Compositions and evaluation of bread | | | | |
|---|---|---|---|---|
| | Example 2 | | Comparative Example 2 | |
| Sponge dough | (g) | (%) | (g) | (%) |
| Strong flour | 1400.0 | 37.47 | 1400.0 | 37.47 |
| Fresh yeast | 40.0 | 1.07 | 40.0 | 1.07 |
| Yeast food | 2.0 | 0.05 | 2.0 | 0.05 |
| Water | 800.0 | 21.41 | 800.0 | 21.41 |
| Final dough | (g) | (%) | (g) | (%) |
| Strong flour | 600.0 | 16.06 | 600.0 | 16.06 |
| Superfine sugar | 120.0 | 3.21 | 120.0 | 3.21 |
| Salt | 34.0 | 0.91 | 34.0 | 0.91 |
| Skimmed milk powder | 60.0 | 1.61 | 60.0 | 1.61 |
| Tricaprin-containing fat and oil | 120.0 | 3.21 | - | - |
| Canola oil | - | - | 120.0 | 3.21 |
| Water | 560.0 | 15.00 | 560.0 | 15.00 |
| Total of raw material | 3736.0 | 100.00 | 3736.0 | 100.00 |
| Evaluation results | | | | |
| Cool feeling | ○ | | × | |

<Evaluation of bread>

The loafs of bread from Example 2 and Comparative Example 2 manufactured as described above were evaluated in accordance with the aforementioned method of evaluating cool feeling.
As clearly shown in Table 2, the loaf of bread manufactured using the tricaprin-containing fat and oil according to the present invention generated cool feeling, but not that manufactured using canola oil.

[Example 3] Manufacture of cookie

According to the compositions shown in Table 3 below, cookies of Example 3 and Comparative Example 3 were manufactured by the conventional method. Specifically, superfine sugar was mixed with margarine which had been brought back to room temperature, and then whole egg was added slowly, and further mixed. Next, cake flour, baking powder, and the tricaprin-containing fat and oil which had been sieved together were added (note that they were not added in Comparative Example), and mixed well to prepare a dough. The dough was rested overnight in a refrigerator, and then rolled out until the thickness became 5 mm, and cut out using a flower-shaped cookie cutter with a diameter of 5 cm, and baked in an oven with an upper flame temperature of 180ºC and a lower flame temperature of 160ºC for 13 minutes.

[Table 3]

| [Table 3] Compositions and evaluation of cookies | | | | |
|---|---|---|---|---|
| | Example 3 | | Comparative Example 3 | |
| Compositions of raw materials | (g) | (%) | (g) | (%) |
| Margarine | 40.0 | 18.48 | 60.0 | 27.71 |
| Superfine sugar | 40.0 | 18.48 | 40.0 | 18.48 |
| Whole egg | 15.0 | 6.93 | 15.0 | 6.93 |
| Weak flour | 100.0 | 46.19 | 100.0 | 46.19 |
| Baking powder | 1.5 | 0.69 | 1.5 | 0.69 |
| Tricaprin-containing fat and oil | 20.0 | 9.23 | - | - |
| Total of raw material | 216.5 | 100.00 | 216.5 | 100.00 |
| Evaluation results | | | | |
| Cool feeling | ○ | | × | |

<Evaluation of cookie>

The cookies from Example 3 and Comparative Example 3 manufactured as described above were evaluated in accordance with the aforementioned method of evaluating cool feeling.

As clearly shown in Table 3, the cookies manufactured using the tricaprin-containing fat and oil according to the present invention generated cool feeling, but not those manufactured without using it.

[Example 4] Manufacture of fish paste product

According to the compositions shown in Table 4 below, fried fish-paste cakes of Example 4 and Comparative Example 4 were manufactured. Specifically, commercially available frozen minced fish meat (Golden threadfin bream A, Sasaya Grade 2) was obtained, and thawed at around -3ºC. This frozen minced fish was cut into blocks of 1/6 to 1/8, and roughly ground in a mortar. After the rough grinding was completed, salt was added when the temperature was -2ºC to 0ºC, and salt-grinding was then performed. When the salt-grinding was almost completed, the tricaprin-containing fat and oil according to the present invention was added (Example) (note that canola oil was added in the following main grinding step for Comparative Example). Next, when the salt-grinding was completed, and the temperature zone was 5ºC to 8ºC, water, potato starch, sugar, and sodium glutamate were added, and the main grinding step was then performed. The resulting fish meat paste was divided into pieces of each 40 g, and each packed into a wooden mold frame for shape-forming. They were fried in oil at 160ºC to 170ºC (the temperature of a product at the center was 82ºC or more). Finally, they were cooled in a freezer so that the temperature of the product at the center became 10ºC or below.

[Table 4]

| [Table 4] Compositions and evaluation of fried fish-paste cakes | | | | |
|---|---|---|---|---|
| | Example 4 | | Comparative Example 4 | |
| Compositions of raw materials | (g) | (%) | (g) | (%) |
| Golden threadfin bream A | 400.0 | 26.60 | 400.0 | 26.60 |
| Sasaya Grade 2 | 400.0 | 26.60 | 400.0 | 26.60 |
| Water | 400.0 | 26.60 | 400.0 | 26.60 |
| Tricaprin-containing fat and oil | 151.0 | 10.03 | - | - |
| Canola oil | - | - | 151.0 | 10.03 |
| Salt | 23.0 | 1.53 | 23.0 | 1.53 |

(continued)

| [Table 4] Compositions and evaluation of fried fish-paste cakes | | | | |
|---|---|---|---|---|
| | Example 4 | | Comparative Example 4 | |
| Compositions of raw materials | (g) | (%) | (g) | (%) |
| Sugar | 40.0 | 2.66 | 40.0 | 2.66 |
| Potato starch | 80.0 | 5.32 | 80.0 | 5.32 |
| Sodium glutamate | 10.0 | 0.66 | 10.0 | 0.66 |
| Total of raw material | 1504.0 | 100.00 | 1504.0 | 100.00 |
| Evaluation results | | | | |
| Cool feeling | ○ | | × | |

<Evaluation of fish paste product>

The fried fish-paste cakes from Example 4 and Comparative Example 4 manufactured as described above were evaluated in accordance with the aforementioned method of evaluating cool feeling.

As clearly shown in Table 4, the fried fish-paste cakes manufactured using the tricaprin-containing fat and oil according to the present invention generated cool feeling, but not those manufactured using canola oil.

[Example 5] Manufacture of chocolate

According to the compositions shown in Table 5 below, bars of chocolate of Example 5 and Comparative Example 5 were manufactured. Specifically, in accordance with the conventional method, the following raw materials were mixed, and micronizing (refining) treatment and kneading (conching) treatment were then performed followed by cooling solidification to manufacture chocolate. More specifically, raw materials (cacao mass, cocoa butter, and the like) were mixed while heating at 60ºC for about 5 minutes with a mixer (multi-purpose mixing agitator 8 XDML: DALTON Corporation) until they became homogeneous. Raw chocolate was then obtained. The resulting raw chocolate was ground with a roll refiner (SDY hydraulic three-roll mill: BUHLER), and microatomized until the mean particle size became about 20 $\mu$m. The refined chocolate dough was subjected to conching with the above mixer over 20 minutes or more. After liquefied, the oil content was adjusted to obtain raw liquefied chocolate. The temperature of the raw liquefied chocolate was adjusted to 30°C, and poured into a mold for shape-forming. Then the raw liquefied chocolate was cooled and solidified at 10 to 20°C.

[Table 5]

| [Table 5] Compositions and evaluation of chocolate | | | | |
|---|---|---|---|---|
| | Example 5 | | Comparative Example 5 | |
| Compositions of raw materials | (g) | (%) | (g) | (%) |
| Cocoa butter | 2.0 | 0.2 | 202.0 | 20.2 |
| Tricaprin-containing fat and oil | 200.0 | 20.0 | - | - |
| Lecithin | 5.0 | 0.5 | 5.0 | 0.5 |
| Vanilla flavoring agent | 0.5 | 0.05 | 0.5 | 0.05 |
| Cacao mass | 360.0 | 36.0 | 360.0 | 36.0 |
| Cocoa powder | - | - | - | - |
| Sugar | 432.5 | 43.25 | 432.5 | 43.25 |
| Total of raw material | 1000.0 | 100.00 | 1000.0 | 100.00 |
| Evaluation results | | | | |
| Cool feeling | ○ | | × | |

<Evaluation of chocolate>

The bars of chocolate from Example 5 and Comparative Example 5 manufactured as described above were evaluated in accordance with the aforementioned method of evaluating cool feeling.

As clearly shown in Table 5, the bars of chocolate manufactured using the tricaprin-containing fat and oil according to the present invention provides cool feeling, but not those manufactured without using it.

[Example 6] Manufacture of chocolate powder

According to the compositions shown in Table 6 below, chocolate powders of Example 6 and Comparative Example 6 were manufactured. Specifically, cocoa powder, powdered sugar, a chocolate flavoring agent, and sweetening agents A and B were added to the tricaprin-containing fat and oil which had been placed in a container, and mixed using a spatula to prepare chocolate powder (plain).

[Table 6]

| [Table 6] Compositions and evaluation of powdered chocolate | | | | |
|---|---|---|---|---|
| | Example 6 | | Comparative Example 6 | |
| Compositions of raw materials | (g) | (%) | (g) | (%) |
| Tricaprin-containing fat and oil | 74.00 | 74.00 | - | - |
| Powder of fats and oils | - | - | 74.00 | 74.00 |
| Cocoa powder | 20.00 | 20.00 | 20.00 | 20.00 |
| Powdered sugar | 5.05 | 5.05 | 5.05 | 5.05 |
| Chocolate flavoring agent | 0.75 | 0.75 | 0.75 | 0.75 |
| Sweetening agent A | 0.15 | 0.15 | 0.15 | 0.15 |
| Sweetening agent B | 0.05 | 0.05 | 0.05 | 0.05 |
| Total of raw material | 100.0 | 100.0 | 100.0 | 100.0 |
| Evaluation results | | | | |
| Cool feeling | ○ | | × | |

<Evaluation of chocolate powder>

The chocolate powders from Example 6 and Comparative Example 6 manufactured as described above were evaluated in accordance with the aforementioned method of evaluating cool feeling.

As clearly shown in Table 6, the chocolate powder manufactured using the tricaprin-containing fat and oil according to the present invention generated cool feeling, but not that manufactured using a powder of fats and oils.

[Example 7] Manufacture of butter cream

According to the compositions shown Table 7 below, butter creams of Example 7 and Comparative Example 7 were manufactured by the conventional method. Specifically, the tricaprin-containing fat and oil according to the present invention was added to shortening, and mixed lightly. Then, commercially available Melpiabase (Nisshin OilliO Group, Ltd.) was added, and mixed thoroughly (specific gravity: 0.5). Premixed other materials were further added, and mixed thoroughly to adjust the specific gravity to 0.6.

[Table 7]

| [Table 7] Compositions and evaluation of butter creams | | | | |
|---|---|---|---|---|
| | Example 7 | | Comparative Example 7 | |
| Compositions of raw materials | (g) | (%) | (g) | (%) |
| Shortening | 80.0 | 28.0 | 100.0 | 35.0 |

(continued)

| [Table 7] Compositions and evaluation of butter creams | | | | |
|---|---|---|---|---|
| | Example 7 | | Comparative Example 7 | |
| Compositions of raw materials | (g) | (%) | (g) | (%) |
| Tricaprin-containing fat and oi1 | 20.0 | 7.0 | - | - |
| Melpiabase | 60.0 | 21.0 | 60.0 | 21.0 |
| Maltose syrup | 120.0 | 42.0 | 120.0 | 42.0 |
| Western liquor | 5.0 | 1.8 | 5.0 | 1.8 |
| Flavoring agent | 0.6 | 0.2 | 0.6 | 0.2 |
| Total of raw material | 285.6 | 100.0 | 285.6 | 100.0 |
| Evaluation results | | | | |
| Cool feeling | ○ | | × | |

<Evaluation of butter cream>

The butter creams from Example 7 and Comparative Example 7 manufactured as described above were evaluated in accordance with the aforementioned method of evaluating cool feeling.
As clearly shown in Table 7, the butter cream manufactured using the tricaprin-containing fat and oil according to the present invention generated cool feeling, but not that manufactured without using it.

[Example 8] Manufacture of sponge cake

According to the composition shown in Table 8 below, a sponge cake of Example 8 was manufactured by the conventional method (the all-in mixing method). Specifically, the tricaprin-containing fat and oil in a powder form was first dissolved, and the temperature thereof was controlled at about 30°C to prepare a liquid-like material. The sponge cake was manufactured as in above Example 1 except that the liquid-like material was used. It is noted that the composition of Example 1 was also shown together in Table 8 for comparison.

[Table 8]

| [Table 8] Compositions and evaluation of sponge cakes | | | | |
|---|---|---|---|---|
| | Example 1 | | Example 8 | |
| Compositions of raw materials | (g) | (%) | (g) | (%) |
| Jisel 100 | 17.0 | 4.1 | 17.0 | 4.1 |
| Tricaprin-containing fat and oil (Powdered) | 20.0 | 4.8 | - | - |
| Tricaprin-containing fat and oil (liquefied) | - | - | 20.0 | 4.8 |
| Superfine sugar | 110.0 | 26.3 | 110.0 | 26.3 |
| Whole egg | 170.0 | 40.7 | 170.0 | 40.7 |
| Weak flour | 100.0 | 23.9 | 100.0 | 23.9 |
| Baking powder | 1.0 | 0.2 | 1.0 | 0.2 |
| Total of raw material | 418.0 | 100.0 | 418.0 | 100.0 |
| Evaluation results | | | | |
| Cool feeling | ○ | | ○ | |

As clearly shown in Table 8, the sponge cake manufactured using the liquid-like material in which the tricaprin-containing fat and oil in a powered form according to the present invention was dissolved also generated cool feeling as was the sponge cake manufactured using the material in a powder form. However, cool feeling was felt somewhat weaker than the case where the material in a powder form was used.

[Example 9] Manufacture of fish paste product

According to the composition shown in Table 9 below, a fried fish-paste cake of Example 9 was manufactured. Specifically, the tricaprin-containing fat and oil in a powder form was first dissolved, and the temperature thereof was controlled at about 30°C to prepare a liquid-like material. The fried fish-paste cake was manufactured as in above Example 4 except that the liquid-like material was used. It is noted that the composition of Example 4 was also shown together in Table 9 for comparison.

[Table 9]

| [Table 9] Compositions and evaluation of fried fish-paste cakes | | | | |
|---|---|---|---|---|
| | Example 4 | | Example 9 | |
| Compositions of raw materials | (g) | (%) | (g) | (%) |
| Golden threadfin bream A | 400.0 | 26.60 | 400.0 | 26.60 |
| Sasaya Grade 2 | 400.0 | 26.60 | 400.0 | 26.60 |
| Water | 400.0 | 26.60 | 400.0 | 26.60 |
| Tricaprin-containing fat and oil (Powdered) | 151.0 | 10.03 | - | - |
| Tricaprin-containing fat and oil (liquefied) | - | - | 151.0 | 10.03 |
| Salt | 23.0 | 1.53 | 23.0 | 1.53 |
| Sugar | 40.0 | 2.66 | 40.0 | 2.66 |
| Potato starch | 80.0 | 5.32 | 80.0 | 5.32 |
| Sodium glutamate | 10.0 | 0.66 | 10.0 | 0.66 |
| Total of raw material | 1504.0 | 100.00 | 1504.0 | 100.00 |
| Evaluation results | | | | |
| Cool feeling | ○ | | ○ | |

As clearly shown in Table 9, the fried fish-paste cake manufactured using the liquid-like material in which the tricaprin-containing fat and oil in a powder form according to the present invention was dissolved also generated cool feeling as was the fried fish-paste cake manufactured using the material in a powder form. However, cool feeling was felt somewhat weaker than the case where the material in a powder form was used.

**Claims**

1.    Use of tricaprin for imparting cool feeling on a food product, wherein the amount of tricaprin added to the food product is 0.1 to 99 mass% relative to the total mass of the food product.

2.    Use of tricaprin according to claim 1, wherein the food product is selected from the group consisting of cake, bread, cookie, fish paste products, chocolate, powdered chocolate, and cream.

**Patentansprüche**

1.    Verwendung von Tricaprin zur Vermittlung eines kühlen Gefühls auf einem Lebensmittelprodukt, worin die Menge an Tricaprin, die dem Lebensmittelprodukt zugesetzt wird, 0,1 bis 99 Masse-% relative zur Gesamtmasse des Lebensmittelprodukts ist.

2.    Verwendung von Tricaprin nach Anspruch 1, worin das Nahrungsmittelprodukt aus der Gruppe bestehend aus Kuchen, Brot, Kekse, Fischpastenprodukte, Schokolade, Schokoladenpulver und Sahne ausgewält ist.

**Revendications**

1. Utilisation de tricaprine pour donner une sensation de fraîcheur sur un produit alimentaire, dans laquelle la quantité de tricaprine ajoutée au produit alimentaire est de 0,1 à 99 % en masse par rapport à la masse totale du produit alimentaire.

2. Utilisation de tricaprine selon la revendication 1, dans laquelle le produit alimentaire est choisi dans le groupe constitué par le gâteau, le pain, les biscuits, les pâtes de poissons, le chocolat, le chocolat en poudre et la crème.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2564255 B
- JP S63202340 B
- JP 4815746 B
- US 3658555 A

**Non-patent literature cited in the description**

- *JAOCS,* 1993, vol. 70 (11), 1111-1114
- *J. High Resol. Chromatogr.,* 1995, vol. 18, 105-107